# FASCICULE DE BREVET EUROPEEN

(11) **EP 1 241 215 B1**
(45) Date de publication et mention de la délivrance du brevet: **09.01.2008**
(21) Numéro de dépôt: 02290677.0
(22) Date de dépôt: 18.03.2002
(51) Int. Cl.: C08L 1/02, C08K 7/00, C08K 5/098, C10M 105/24, C10M 171/06

(54) **Matériau compact repulpable comprenant un lubrificant et procédé de fabrication du matériau**
Wiederaufschliessbares, kompaktes und Schmiermittel enthaltendes Material und Verfahren zur Herstellung des Materials
Repulpable compact material comprising a lubricant and process for production of the material

(30) Priorité: 16.03.2001 FR 0103613
(43) Date de publication de la demande: 18.09.2002
(73) Titulaire: CELTA, F-92200 NEUILLY SUR SEINE (FR)
(72) Inventeur: Van Delft, Baudoin, 63190 Orleat (FR); Benammar, Rachid, 69170 Tarare (FR); Watine, Jean-Luc, 03200 le Vernet Cedex 230 (FR)
(74) Mandataire: Cabinet Plasseraud

(56) Documents cités:
- EP-A- 0 664 357
- EP-A- 0 719 824
- EP-A- 0 780 205
- EP-A- 0 936 245
- US-A- 5 362 776
- US-A- 5 677 369

## Description

L'invention a pour objet un matériau compact repulpable comprenant un lubrifiant choisi parmi les stéarates métalliques. Elle a également pour objet le procédé de fabrication dudit matériau compact repulpable par extrusion.

Par l'expression « matériau compact », on entend, au sens de la présente invention, un matériau présentant une cohésion et une résistance mécanique suffisantes pour pouvoir être utilisé par exemple dans l'industrie de l'ameublement, dans l'industrie de la construction (par exemple pour la fabrication de panneaux ou de cloisons), dans l'industrie horticole (par exemple pour la fabrication de plateaux pour plantes en pots) ou dans l'industrie de l'emballage (par exemple pour la fabrication de palettes, d'éléments de support, de cales, d'éléments d'espacement).

Par l'expression « repulpable », on entend, toujours au sens de la présente invention, la propriété qu'a le matériau de pouvoir être utilisé directement, après un broyage éventuel, comme matière première dans la fabrication du papier, sans nécessiter aucune opération de triage ou de séparation physique, mécanique, ou physico-chimique, et sans générer d'autres déchets que les déchets normalement produits lors de la fabrication du papier. Un tel matériau repulpable peut donc être automatiquement introduit au niveau du pulper de la machine à papier, sans opération de tri préalable.

La demande de brevet EP 936 245 décrit un procédé de préparation par moulage d'un article à partir de poussière de matériau cellulosique (de taille habituelle 2 mm, voire beaucoup moins), d'amidon, d'un sel d'acide gras à longue chaîne, et de beaucoup d'eau (32,7 à 66,5% dans le mélange). L'article obtenu n'est pas compact, il est peu dense et très fin, et ne présente pas une grande résistance. Il est d'ailleurs dégradable dans le sol en une à deux semaines. De plus, l'utilisation de matériaux cellulosiques de taille si petite et d'une telle quantité d'eau présente des inconvénients certains (risque d'explosion, mélange hétérogène).

On connaît déjà des matériaux compacts repulpables, à base de matériaux cellulosiques. On citera en particulier le brevet EP 664 357, au nom de la Demanderesse, décrivant un matériau compact résistant à l'eau, à base de matériaux cellulosiques broyés, repulpable, comprenant, d'une part, une quantité efficace d'un liant organique et, d'autre part, une quantité efficace d'un agent de résistance à l'eau.

Le matériau selon le brevet EP 664 357 remplace avantageusement les matériaux à base de bois et de dérivés du bois, difficilement réutilisables.

Cependant, il s'avère qu'un tel matériau présente des inconvénients dans certains cas. Plus précisément, il s'est avéré que les résultats attendus lors de la fabrication de certaines formes complexes, tels que certains profilés de calage, ou lors de fabrication à haut débit, n'étaient pas totalement satisfaisants. Ainsi, on observe parfois des problèmes d'instabilité dimensionnelle, de dégradation thermique du produit fabriqué et, souvent, on finit par encrasser la vis de l'extrudeuse et boucher la filière. En effet, du fait de l'encrassage, l'extrusion nécessite une énergie mécanique de plus en plus élevée. Dans le cas de formes complexes ou à un débit élevé, l'extrudeuse n'est tout simplement plus assez puissante pour atteindre le niveau d'énergie requis. Cet inconvénient n'apparaît pas lors de la fabrication de formes simples ou à faible débit.

La Demanderesse a donc cherché à développer un nouveau matériau compact, de préférence résistant à l'eau, permettant d'éliminer les problèmes de blocage de la filière, tout en conservant des qualités de repulpabilité.

La solution a été trouvée de manière inattendue en associant aux composés habituels un lubrifiant. Le lubrifiant peut en particulier être un ou des stéarates métalliques, plus particulièrement un ou des stéarates métalliques présentant un point de fusion de l'ordre de 60°C à 170°C. On obtient ainsi un matériau compact, efficace à haut débit et quelle que soit la complexité de la forme recherchée, ledit matériau conservant malgré tout, de façon surprenante et inattendue, ses qualités indispensables de repulpabilité.

Le lubrifiant est ajouté en une quantité efficace aux composants habituels d'un matériau compact repulpable. Ces composants sont tels que ceux décrits dans le brevet EP 664 357 précédemment cité, à savoir des matériaux cellulosiques broyés et un liant organique, auquel peut être ajouté un agent de résistance à l'eau ou agent hydrofugeant.

On désigne par « quantité efficace », dans la présente demande, la quantité suffisante pour obtenir l'effet recherché.

L'invention a donc pour objet un matériau compact repulpable, à base de matériaux cellulosiques broyés, comprenant une quantité efficace d'un liant organique choisi dans le groupe comprenant les amidons, les dérivés d'amidon (par exemple les dextrines), les farines, les protéines (par exemple les collagènes, albumines, ou caséines), les sous-produits d'amidonnerie et de féculerie, les celluloses et leurs dérivés, les hémicelluloses et leurs dérivés, les pectines, ainsi que les mélanges de ces produits,
et comprenant en outre une quantité efficace d'un lubrifiant, le matériau étant fabriquable sous des formes complexes.

Le terme « matériaux cellulosiques broyés » désigne des matériaux ayant subi un broyage, par exemple avec un broyeur à couteaux ou un broyeur à marteau, de préférence avec un broyeur à couteaux, c'est-à-dire des matériaux cellulosiques sous forme de fragments. Ces fragments peuvent être de dimensions telles qu'ils passent à travers une grille de tamisage de dimensions 4x4 mm à 15x15 mm, de préférence 5x5 mm à 10x10 mm, de préférence encore 6x6 mm à 7x7 mm. Le broyage génère inévitablement de la poussière de fibres cellulosiques, de dimensions très inférieures, de l'ordre de 1 à 2 mm voire moins. On limite de préférence la présence de cette poussière à 10% maximum en poids par rapport au poids total de matériau cellulosique, afin de limiter les inconvénients qui en découlent. En effet, la poussière est explosive en raison des charges électrostatiques ; la réglementation impose d'ailleurs un faible taux de poussière. De plus, elle absorbe beaucoup d'eau et de liant, et le mélange obtenu contient des agglomérats et est donc hétérogène, et il difficile à transformer. Par ailleurs, il est connu dans les domaines de la cellulose, du textile et du verre, que l'utilisation de fibres courtes génère un produit final de moindre qualité que lorsqu'on utilise des fibres plus longues.

Le terme « amidon » désigne un amidon de toute origine, naturel ou hybride, provenant par exemple de la pomme de terre, du manioc, du maïs, du maïs cireux, du maïs à haute teneur en amylose, du blé et des coupes qui peuvent en être faites, de l'orge et du sorgho. Le terme « dérivé d'amidon » désigne un amidon modifié par voie physique et/ou chimique.

Dans un mode de réalisation préférentiel, le matériau comprend en outre une quantité efficace d'un agent de résistance à l'eau choisi parmi les agents hydrofugeants organosiliciques et les copolymères acryliques fluorés

En effet, le matériau sera de préférence résistant à l'eau. Cette caractéristique est rendue nécessaire par certains utilisations du matériau conforme à l'invention, en particulier lorsqu'il est susceptible d'être utilisé dans des atmosphères humides voire très humides, ou lorsqu'il est susceptible d'être mis en contact avec des sols humides.

Le lubrifiant est choisi parmi les stéarates métalliques tels que le stéarate de zinc, le stéarate de magnésium, le stéarate de plomb, le stéarate de baryum, le stéarate d'aluminium, le stéarate de cadmium, le stéarate de calcium. Le lubrifiant sera de préférence un ou des stéarates métalliques présentant un point de fusion de l'ordre de 60°C à 170°C, plus préférentiellement de l'ordre de 100°C à 150°C. Un stéarate particulièrement préféré est le stéarate de zinc.

Le lubrifiant peut être ajouté sous toute forme appropriée, par exemple sous forme de poudre ou de granules.

Le lubrifiant est présent dans le matériau compact repulpable conforme à l'invention avantageusement en une quantité de l'ordre de 0,4% à 5%, de préférence de l'ordre de 0,8 à 4%, plus préférentiellement encore de l'ordre de 1% à 2,5%, les quantités étant exprimées en poids par rapport au poids total du matériau compact repulpable avant le traitement de mise en forme.

Ledit matériau compact comprend avantageusement, par rapport au poids de matériaux cellulosiques broyés, une proportion de 0,5% à 40%, de préférence de 1% à 25%, et plus préférentiellement encore de 2% à 20%, en poids de liant organique.

Lorsque le matériau compact conforme à l'invention est résistant à l'eau, il comprend de manière préférée une proportion de 0,005% à 10%, de préférence de 0,025% à 6%, et plus préférentiellement encore de 0,05% à 4%, d'agent hydrofugeant en poids par rapport au poids de matériaux cellulosiques broyés.

La proportion d'agent hydrofugeant est, in fine, calculée de façon à conférer au matériau compact une tenue à l'eau satisfaisante, sachant que l'objectif principal visé par l'invention est d'assurer la repulpabilité du matériau obtenu.

Le matériau conforme à l'invention peut également comprendre d'autres constituants tels que, par exemple, des bactéricides, des fongicides, des raticides.

Il peut également comprendre des agents durcisseurs, présents en une proportion de 0,5% à 25%, de préférence 1 à 5%, en poids par rapport au poids de matériaux cellulosiques broyés.

Les agents durcisseurs en question peuvent être choisis dans le groupe des agents alcalins, plus particulièrement dans le groupe des hydroxydes et oxydes de métaux alcalins ou alcalino-terreux, ou dans le groupe des sels de bases fortes ou de bases faibles, et notamment parmi les carbonates de métaux alcalins ou alcalino-terreux. L'agent durcisseur préféré est constitué par la chaux hydratée.

Les matériaux compacts repulpables conformes à l'invention peuvent être mis en forme par extrusion. Le brevet EP 664 357 cité précédemment décrit un procédé possible d'extrusion.

Un procédé de préparation du matériau compact repulpable conforme à l'invention est le suivant :
- sélection d'un matériau cellulosique broyé, d'un liant organique, d'un lubrifiant, éventuellement d'autres composants,
- mélange des composés dans un ordre quelconque,
- traitement de mise en forme du mélange ainsi obtenu par extrusion.

Dans un mode de réalisation préféré, on met en forme le mélange par extrusion en utilisant une extrudeuse bi-vis cônique contra-rotative, qui permet d'obtenir plus de pression au niveau de la tête de l'extrudeuse et le refroidissement à air du produit extrudé.

La teneur en eau du matériau repulpable avant le traitement de mise en forme, donc du mélange des composés, est de l'ordre de 3% à 20% en poids, de préférence de l'ordre de 5 à 15% en poids.

Le matériau compact repulpable obtenu après le traitement de mise en forme présente une densité de 0,8 à 1,5, de préférence 0,9 à 1,3, plus préférentiellement 1,0 à 1,2.

Dans un mode de réalisation préféré, le lubrifiant est ajouté au matériau compact repulpable conforme à l'invention sous forme de mélange lubrifiant comprenant un lubrifiant, un ou des matériaux cellulosiques, et un ou des liants organiques.

De manière plus préféré, le lubrifiant est ajouté sous forme de granulés de mélange lubrifiant. En effet, il a été observé que cela permet d'obtenir une meilleure dispersion du lubrifiant dans le matériau compact repulpable, et donc une meilleure efficacité du lubrifiant.

De manière préférentielle, l'invention a donc également pour objet un lubrifiant sous forme de granulés de mélange lubrifiant. Les granulés de mélange lubrifiant comprennent un lubrifiant, un ou des matériaux cellulosiques, et un ou des liants organiques.

Le lubrifiant présent dans les granulés est tel que défini ci-dessus, c'est-à-dire qu'il est choisi parmi les stéarates métalliques tels que le stéarate de zinc, le stéarate de magnésium, le stéarate de plomb, le stéarate de baryum, le stéarate d'aluminium, le stéarate de cadmium stéarate de calcium. Le lubrifiant sera de préférence un ou des stéarates métalliques présentant un point de fusion de l'ordre de 60°C à 170°C plus préférentiellement de l'ordre de 100°C à 150°C. Un stéarate particulièrement préféré est le stéarate de zinc.

Le liant organique est tel que défini ci-dessus, c'est-à-dire qu'il est choisi dans le groupe comprenant les amidons, les dérivés d'amidon (par exemple les dextrines), les farines, les protéines (par exemple les collagènes, albumines, ou caséines), les sous-produits d'amidonnerie et de féculerie, les celluloses et leurs dérivés, les hémicelluloses et leurs dérivés, les pectines, ainsi que les mélanges de ces produits. Si on choisit l'amidon, on utilisera de préférence sous forme de farine ou de semoule, en particulier la fécule de pomme de terre.

Les matériaux cellulosiques, qui peuvent être présents sous forme broyée, peuvent être des dérivés du bois, du carton, du carton ondulé, du papier, par exemple des fibres de papier. Il peut également s'agir de fibres ou poussière de cellulose. Les matériaux cellulosiques utilisés dans les granulés sont de préférence de dimensions telles qu'ils passent au travers d'une grille de tamisage de dimensions 3x3 mm ou 4x4 mm maximum.

Les granulés de mélange lubrifiant comprennent de préférence, en poids par rapport au poids total des constituants avant l'éventuel traitement de mise en forme,
- de 40% à 60%, de préférence de 45% à 55%, et plus préférentiellement de 50% à 54%, de lubrifiant(s),
- de 20% à 40%, de préférence de 25% à 35 %, et plus préférentiellement de 29% à 33%, de liant(s) organique(s),
- de 10% à 20%, de préférence de 12% à 18 %, et plus préférentiellement de 15% à 16%, de matériaux cellulosiques.

Le mélange lubrifiant sous forme de granulés conforme à l'invention peut également comprendre d'autres constituants tels que, par exemple, des bactéricides, des fongicides, des raticides.

Les granulés de mélange lubrifiant sont préparés par tout procédé approprié connu de l'homme de l'art, notamment par mélange des constituants puis traitement de mise en forme du mélange. Le traitement de mise en forme peut être par exemple une extrusion ou une « pelletisation ».

Si on prépare le mélange lubrifiant sous forme de granulés par extrusion, un procédé utilisable est le suivant : on mélange les quantités appropriées de lubrifiant, de liant organique et de matériaux cellulosiques dans un malaxeur, en même temps qu'on ajoute une quantité appropriée d'eau ; le mélange obtenu est ensuite extrudé pour être transformé en granulés. On peut utiliser comme extrudeuse une extrudeuse EREMA. Les température et pression d'extrusion pourront aisément être déterminées par l'homme de l'art. En tout état de cause, des température et pression moyennes sont utilisables.

Si on prépare le mélange lubrifiant sous forme de granulés par pelletisation, deux types d'appareillages peuvent être utilisés.

Le premier type d'appareillage comprend un cylindre vertical, muni d'un tamis horizontal circulaire formant une filière, et de galets crantés tournants. L'entrée du mélange se fait par le haut du cylindre. Dans le cylindre, les galets crantés tournants écrasent le mélange et le forcent au travers des orifices ou canaux de la filière, formant ainsi les granulés, qui sont coupés par un ou plusieurs couteaux rotatifs présents à l'extérieur du cylindre ; les couteaux rotatifs tournant à la même vitesse que les galets crantés.

Le deuxième type d'appareillage comprend un tambour horizontal percés de plusieurs orifices ou canaux (formant une filière), dans lequel tournent plusieurs galets. Les galets tournants forcent le mélange au travers des orifices ou canaux vers l'extérieur, où les granulés sont coupés par le ou les couteaux rotatifs.

Dans ces procédés de pelletisation, on ne chauffe pas l'appareillage, mais la température peut monter jusqu'à 100°C par simple friction mécanique, en fonction de la teneur en lubrifiant et de la teneur en eau, ce qui permet la gélatinisation du liant organique tel que l'amidon. De plus, la longueur des orifices ou canaux, c'est-à-dire l'épaisseur de la filière, a un effet sur la densité en vrac des granulés obtenus.

Les granulés de lubrifiant peuvent être sensiblement sphériques ou cylindriques. S'ils sont sphériques ou sensiblement sphériques, ils ont de préférence un diamètre de l'ordre de 1 mm à 5 mm, de préférence de l'ordre de 2 mm à 4 mm, par exemple de l'ordre de 3 mm. S'ils sont cylindriques ou sensiblement cylindriques, ils ont de préférence une longueur de l'ordre de 1 mm à 7 mm, de préférence de l'ordre de 2 mm à 5 mm.

Les granulés préparés par extrusion présentent de préférence une densité en vrac de l'ordre de 0,2 à 0,7, de préférence encore de l'ordre de 0,3 à 0,5. Les granulés préparés par pelletisation présentent de préférence une densité en vrac de l'ordre de 0,5 à 0,9, de préférence encore de l'ordre de 0,5 à 0,7.

D'une manière générale, on observe que les granulés formés par extrusion sont sensiblement sphériques, alors que les granulés formés par pelletisation sont plus allongés (longueur de 1,5 à 2,5 fois le diamètre).

La teneur en eau du mélange lubrifiant sous forme de granulés avant le traitement de mise en forme est de l'ordre de 3% à 20% en poids, de préférence de l'ordre de 5 à 15% en poids.

L'ajout de lubrifiant permet de réaliser sans problème des matériaux compacts repulpables fabriquables sous des formes complexes et/ou avec un débit élevé. Les matériaux obtenus ont une surface très lisse et brillante. L'effort en terme de couple ou de pression nécessaire à l'extrusion d'un boudin ou profilé est de l'ordre de 2 à 5 fois moindre que lorsque le lubrifiant n'est pas utilisé.

L'invention est illustrée plus en détails au moyen des exemples suivants de préparation de lubrifiant sous forme de granulés, et de préparation de matériau compact repulpable comprenant un lubrifiant.

### EXEMPLE 1

Dans un malaxeur, on introduit, d'une part, 10 kg de stéarate de zinc, et d'autre part, 6 kg d'amidon de fécule de pomme de terre et 3 kg de fibres de papier (poussière de papier). On ajoute progressivement et durant le malaxage 1,5 1 d'eau. On malaxe le mélange pendant 15 minutes. Le mélange obtenu est introduit dans la trémie d'une extrudeuse de laboratoire pour être transformé en granulés. Les températures d'extrusion sont 20°C, 40°C, 60°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajoutés de façon contrôlée dans la trémie d'une extrudeuse afin d'extruder des profilés à partir de carton broyé (65% en poids) et d'amidon (29% en poids). Le lubrifiant, provenant des granulés lubrifiant, est présent à hauteur de 6% en poids. Le mélange avant extrusion comprend 15% d'eau par rapport à la matière sèche. La densité des profilés obtenu est de 1,2.

L'extrusion de profilés a été faite sans poser de problème de dégradation de la matière ni de bouchage de la filière.

### EXEMPLE 2

Dans un malaxeur, on introduit, d'une part, 10 kg de stéarate de calcium, et d'autre part, 6 kg d'amidon de fécule de pomme de terre et 3 kg de fibres de papier (poussière de papier). On ajoute progressivement et durant le malaxage 1,5 1 d'eau. On malaxe le mélange pendant 15 minutes. Le mélange obtenu est introduit dans la trémie d'une extrudeuse de laboratoire pour être transformé en granulés. Les températures d'extrusion sont 35°C, 60°C, 80°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajouté de façon contrôlée dans la trémie d'une extrudeuse afin d'extruder des profilés à partir de carton broyé et d'amidon, dans les mêmes proportions que dans l'exemple 1. Le mélange avant extrusion comprend 15% d'eau par rapport à la matière sèche. La densité des profilés obtenu est de 1,2.

L'extrusion de profilés a été faite sans poser de problème de dégradation de la matière ni de bouchage de la filière.

### EXEMPLE 3

Dans un malaxeur, on introduit, d'une part, 6 kg de stéarate de zinc, et d'autre part, 4 kg de stéarate de calcium, 6 kg d'amidon de fécule de pomme de terre et 3 kg de fibres de papier (poussière de papier). On ajoute progressivement et durant le malaxage 1,5 1 d'eau. On malaxe le mélange pendant 15 minutes. Le mélange obtenu est introduit dans la trémie d'une extrudeuse de laboratoire pour être transformé en granulés. Les températures d'extrusion sont 30°C, 50°C, 70°C et la pression est d'environ 15 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur et sont ajouté de façon contrôlée dans la trémie d'une extrudeuse afin d'extruder des profilés à partir de carton broyé et d'amidon, dans les mêmes proportions que dans l'exemple. Le mélange avant extrusion comprend 15% d'eau par rapport à la matière sèche. La densité des profilés obtenu est de 1,2.

L'extrusion de profilés a été faite sans poser de problème de dégradation de la matière ni de bouchage de la filière.

### EXEMPLE 4

Dans un malaxeur, on introduit, d'une part, 5.5 kg de stéarate de zinc, et d'autre part, 4,3 kg de stéarate de calcium, 6 kg d'amidon de fécule de pomme de terre et 3 kg de fibres de papier (poussière de papier). On ajoute progressivement et durant le malaxage 1,5 1 d'eau. on arrête le malaxage pour l'addition de 0,2 kg de monostéarate de glycérol au mélange. On malaxe le mélange pendant 15 minutes. Le mélange obtenu est introduit dans la trémie d'une extrudeuse de laboratoire pour être transformé en granulés. Les températures d'extrusion sont 40°C, 50°C, 70°C et la pression est de 10 bars.

On obtient ainsi des granulés sphériques d'environ 3 mm de diamètre, présentant une cohésion suffisante pour pouvoir servir à la lubrification durant l'extrusion à chaud de produits et articles repulpables. La densité en vrac de ces granulés varie de 0,3 à 0,5.

Les granulés lubrifiants sont introduits dans un doseur en même temps que les autres composants du mélange compact repulpable, et sont ajoutés de façon contrôlée dans la trémie d'une extrudeuse afin d'extruder des profilés à partir de carton broyé et d'amidon.

On ajoute 3,2% de granulés à un mélange sous forme de pellets, le mélange comprenant 10% d'eau, 25% d'amidon de maïs et 65% de papier broyé (5 mm).

L'extrusion de profilés a été faite sans poser de problème de dégradation de la matière ni de bouchage de la filière.

## Revendications

1. Matériau compact repulpable et fabriquable sous des formes complexes, à base de matériaux cellulosiques broyés dérivés du bois, du carton, du carton ondulé, du papier, de fibres ou de poussières de cellulose, contenant au maximum 10 % en poids de poussière de fibres cellulosiques ayant des dimensions de l'ordre de 1 à 2 mm ou moins, ledit matériau compact repulpable
- étant fabriqué par extrusion d'un mélange ayant une teneur en eau allant de 3 % à 20 % en poids,
- comprenant de 0,5 à 40 % en poids, par rapport au poids de matériaux cellulosiques broyés, d'un liant organique choisi dans le groupe comprenant les amidons, les dérivés d'amidon, les farines, les protéines, les sous-produits d'amidonnerie et de féculerie, les celluloses et leurs dérivés, les hémicelluloses et leurs dérivés, les pectines, ainsi que les mélanges de ces produits,
- comprenant en outre de 0,4 à 5 % en poids, par rapport au poids total du matériau compact repulpable avant le traitement de mise en forme, d'un lubrifiant choisi parmi les stéarates métalliques, et
- présentant, après le traitement de mise en forme, une densité de 0,8 à 1,5.

2. Matériau repulpable selon la revendication 1, dans lequel le lubrifiant est choisi parmi les stéarates présentant un point de fusion de l'ordre de 60°C à 170°C, de préférence de l'ordre de 100°C à 150°C, plus préférentiellement le stéarate de zinc.

3. Matériau compact repulpable selon l'une quelconque des revendications 1 à 2, **caractérisé en ce que** le lubrifiant est présent en une quantité de l'ordre de de 0,8 à 4%, de préférence de l'ordre de 1% à 2, 5%, les quantités étant exprimées en poids par rapport au poids total du matériau compact repulpable avant traitement de mise en forme.

4. Matériau compact repulpable selon l'une quelconque des revendications 1 à 3, comprenant, par rapport au poids de matériaux cellulosiques broyés, une proportion de 1% à 25%, de préférence de 2% à 20%, en poids de liant organique.

5. Matériau compact repulpable selon l'une quelconque des revendications 1 à 4, **caractérisé en ce qu**'il comprend en outre une quantité efficace d'un agent hydrofugeant choisi parmi les agents hydrofugeants organosiliciques et les copolymères acryliques fluorés, de préférence en une proportion de 0,005% à 10%, de préférence encore de 0,025% à 6%, et plus préférentiellement encore de 0,05% à 4% en poids par rapport au poids de matériaux cellulosiques broyés.

6. Matériau compact repulpable selon l'une quelconque des revendications 1 à 5, **caractérisé en ce que** le lubrifiant est ajouté sous forme de mélange lubrifiant comprenant un lubrifiant, un ou des matériaux cellulosiques, et un ou des liants organiques.

7. Matériau compact repulpable selon la revendication 6, **caractérisé en ce que** le mélange lubrifiant est introduit sous forme de granulés sphériques ou sensiblement sphériques dont le diamètre est de l'ordre de 1 mm à 5 mm, de préférence de l'ordre de 2 mm à 4 mm, par exemple de l'ordre de 3 mm ; ou de granulés cylindriques ou sensiblement cylindriques dont la longueur est de l'ordre de 1 mm à 7 mm, de préférence de l'ordre de 2 mm à 5 mm

8. Matériau compact repulpable selon la revendication 6 ou 7, **caractérisé en ce que** le liant organique est de l'amidon sous forme de farine ou de semoule, en particulier de la fécule de pomme de terre.

9. Matériau compact repulpable selon l'une quelconque des revendications 6 à 8, **caractérisé en ce que** le mélange lubrifiant comprend, en poids par rapport au poids total des constituants du mélange lubrifiant avant l'éventuel traitement de mise en forme,
- de 40% à 60%, de préférence de 45% à 55%, et plus préférentiellement de 50% à 54%, de lubrifiant(s),
- de 20% à 40%, de préférence de 25% à 35 %, et plus préférentiellement de 29% à 33 % de liant (s) organique(s),
- de 10% à 20%, de préférence de 12% à 18 %, et plus préférentiellement de 15% à 16%, de matériaux cellulosiques.

10. Matériau compact repulpable selon l'une quelconque des revendications 6 à 9, **caractérisé en ce que** les granulés de mélange lubrifiant présentent une densité en vrac de l'ordre de 0,2 à 0,7, de préférence de l'ordre de 0,3 à 0,5.

11. Matériau compact repulpable selon l'une quelconque des revendications 6 à 9, **caractérisé en ce que** les granulés de mélange lubrifiant présentent une densité en vrac de l'ordre de 0,5 à 0,9, de préférence encore de l'ordre de 0,5 à 0,7.

12. Matériau compact repulpable selon l'une quelconque des revendications 6 à 11, **caractérisé en ce que** les granulés de mélange lubrifiant présentent une teneur en eau avant traitement de mise en forme de l'ordre de 3% à 20% en poids, de préférence de l'ordre de 5% à 15% en poids.

13. Matériau compact repulpable selon l'une quelconque des revendications 1 à 12, **caractérisé en ce qu**'il présente une teneur en eau avant traitement de mise en forme de l'ordre de 5% à 15% en poids.

14. Matériau compact repulpable selon l'une quelconque des revendications 1 à 13, **caractérisé en ce qu**'il présente une densité de 0,9 à 1,3, de préférence de 1,0 à 1,2.

15. Procédé de préparation d'un matériau compact repulpable selon l'une quelconque des revendications 1 à 14, comprenant les étapes suivantes :
- sélection d'un matériau cellulosique broyé, d'un liant organique, d'un lubrifiant, éventuellement d'autres composants,
- mélange des composés dans un ordre quelconque,
- mise en forme du mélange ainsi obtenu par extrusion.

16. Procédé de préparation selon la revendication 15, **caractérisé en ce que** le lubrifiant est ajouté sous forme de mélange lubrifiant.

17. Procédé de préparation selon la revendication 16, **caractérisé en ce que** le mélange lubrifiant est ajouté sous forme de granulés.

18. Procédé de préparation selon la revendication 17, **caractérisé en ce que** les granulés de mélange lubrifiant sont préparés par extrusion ou pelletisation avant d'être mélangés aux autres composants du matériau compact repulpable.

## Claims

1. Repulpable compact material which can be manufactured in complex forms based on ground cellulose materials derived from wood, from cardboard, from corrugated cardboard, from paper, from cellulose fibres or dust, containing a maximum of 10% by weight of cellulose fibre dust having dimensions of the order of 1 to 2 mm or less, wherein the said repulpable compact material
- is manufactured by extrusion of a mixture having a water content of from 3% to 20% by weight,
- comprises from 0.5 to 40% by weight, relative to the weight of ground cellulose materials, of an organic binder chosen from amongst the group comprising starches, starch derivatives, flours, proteins, by-products of starch manufacture, cellulose and derivatives thereof, hemicelluloses and derivatives thereof, pectins, as well as mixtures of these products,
- further comprising from 0.4 to 5% by weight, relative to the total weight of the repulpable compact material before the shaping treatment, of a lubricant chosen from amongst the metal stearates, and
- having a density of 0.8 to 1.5 after the shaping treatment.

2. Repulpable material as claimed in Claim 1, in which the lubricant is chosen from amongst the stearates having a melting point of the order of 60°C to 170°C, preferably of the order of 100°C to 150°C, more preferably zinc stearate.

3. Repulpable compact material as claimed in any one of Claims 1 to 2, **characterised in that** the lubricant is present in a quantity of the order of 0.8 to 4%, preferably of the order of 1% to 2.5%, the quantities being expressed by weight relative to the total weight of the repulpable compact material before the shaping treatment.

4. Repulpable compact material as claimed in any one of Claims 1 to 3, comprising, relative to the weight of ground cellulose materials, a proportion of 1% to 25%, preferably 2% to 20%, by weight of organic binder.

5. Repulpable compact material as claimed in any one of Claims 1 to 4, **characterised in that** it further comprises an effective quantity of a waterproofing agent chosen from amongst the organosilicic waterproofing agents and the fluorinated acrylic copolymers, preferably in a proportion from 0.005% to 10%, more preferably from 0.025% to 6%, and even more preferably from 0.05% to 4% by weight relative to the weight of the ground cellulose materials.

6. Repulpable compact material as claimed in any one of Claims 1 to 5, **characterised in that** the lubricant is added in the form of a lubricating mixture comprising a lubricant, one or several cellulose materials and one or several organic binders.

7. Repulpable compact material as claimed in Claim 6, **characterised in that** the lubricating mixture is introduced in the form of spherical or substantially spherical granules of which the diameter is of the order of 1 mm to 5 mm, preferably of the order of 2 mm to 4 mm, for example of the order of 3 mm; or cylindrical or substantially cylindrical granules of which the length is of the order of 1 mm to 7 mm, preferably of the order of 2 mm to 5 mm.

8. Repulpable compact material as claimed in Claims 6 or 7, **characterised in that** the organic binder is starch in the form of flour or semolina, in particular potato starch.

9. Repulpable compact material as claimed in any one of Claims 6 to 8, **characterised in that** the lubricating mixture comprises, by weight relative to the total weight of the constituents of the lubricating mixture before any shaping treatment,
- from 40% to 60%, preferably from 45% to 55%, and more preferably from 50% to 54%, of lubricant(s),
- from 20% to 40%, preferably from 25% to 35%, and more preferably from 29% to 33%, of organic binder(s),
- from 10% to 20%, preferably from 12% to 18%, and more preferably from 15% to 16%, of cellulose material.

10. Repulpable compact material as claimed in any one of Claims 6 to 9, **characterised in that** the granules of lubricating mixture have a bulk density of the order of 0.2 to 0.7, preferably of the order of 0.3 to 0.5.

11. Repulpable compact material as claimed in any one of Claims 6 to 9, **characterised in that** the granules of lubricating mixture have a bulk density of the order of 0.5 to 0.9, more preferably of the order of 0.5 to 0.7.

12. Repulpable compact material as claimed in any one of Claims 6 to 11, **characterised in that** the granules of lubricating mixture have a water content before shaping treatment of the order of 3% to 20% by weight, preferably of the order of 5% to 15% by weight.

13. Repulpable compact material as claimed in any one of Claims 1 to 12, **characterised in that** it has a water content before shaping treatment of the order of 5% to 15% by weight.

14. Repulpable compact material as claimed in any one of Claims 1 to 13, **characterised in that** it has a density of 0.9 to 1.3, preferably from 1.0 to 1.2.

15. Method of preparation of a repulpable compact material as claimed in any one of Claims 1 to 14, comprising the following steps:
- selection of a ground cellulose material, an organic binder, a lubricant, and possibly other components,
- mixing of the components in any order,
- shaping of the mixture thus obtained by extrusion.

16. Method of preparation as claimed in Claim 15, **characterised in that** the lubricant is added in the form of a lubricating mixture.

17. Method of preparation as claimed in Claim 16, **characterised in that** the lubricating mixture is added in the form of granules.

18. Method of preparation as claimed in Claim 17, **characterised in that** the granules of lubricating mixture are prepared by extrusion or pelletisation before being mixed with the other components of the repulpable compact material.

## Patentansprüche

1. Wiederaufschließbares, kompaktes und in komplexen Formen herstellbares Material auf Grundlage von zerkleinerten aus Holz, Pappe, Wellpappe, Papier, Zellulosefasern oder-staub abgeleiteten Zellulosewerkstoffen, das maximal einen Gewichtsanteil von 10 % Zellulosefaserstaub aufweist, der Abmessungen von ungefähr 1 bis 2 mm oder weniger aufweist, wobei dieses wiederaufschließbare, kompakte Material
- durch Strangpressen einer Mischung mit einem Gewichtsanteil von 3 % bis 20 % Wasser gefertigt wird
- und mit einen Gewichtsanteil von 0,5 bis 40 % im Verhältnis zum Gewicht des zerkleinerten Zellulosewerkstoffs ein organisches Bindemittel umfasst, das aus der Gruppe ausgewählt wird, die Stärke, Stärkederivate, Mehle, Proteine, Unterprodukte der Stärke- und Kartoffelstärkeindustrie, Zellulosen und ihre Derivate, Hemizellulosen und ihre Derivate, Pektine sowie die Mischungen dieser Produkte umfasst,
- und ferner mit einen Gewichtsanteil von 0,4 bis 5 % im Verhältnis zum Gesamtgewicht des wiederaufschließbaren, kompakten Materials vor der Formgebungsbehandlung ein Schmiermittel umfasst, das unter den metallischen Stearaten ausgewählt wird, und
- nach der Formgebungsbehandlung eine Dichte von 0,8 bis 1,5 aufweist.

2. Wiederaufschließbares Material nach Anspruch 1, bei dem das Schmiermittel unter den Stearaten ausgewählt wird, die einen Schmelzpunkt von 60 °C bis 170 °C und vorzugsweise von 100 °C bis 150 °C aufweisen, insbesondere vorzugsweise Zinkstearat.

3. Wiederaufschließbares, kompaktes Material nach einem der Ansprüche 1 bis 2, **dadurch gekennzeichnet, dass** das Schmiermittel in einer Menge von 0,8 bis 4 %, vorzugsweise von 1 % bis 2,5 %, vorhanden ist, wobei die Mengen im Verhältnis zum Gesamtgewicht des wiederaufschließbaren, kompakten Materials vor der Formgebungsbehandlung in Gewichtsanteilen angegeben werden.

4. Wiederaufschließbares, kompaktes Material nach einem der Ansprüche 1 bis 3, **dadurch gekennzeichnet, dass** es im Verhältnis zum Gewichtsanteil zerkleinerter Zellulosewerkstoffe einen Gewichtsanteil von 1 % bis 25 %, vorzugsweise von 2 % bis 20 %, eines organisches Bindemittels aufweist.

5. Wiederaufschließbares, kompaktes Material nach einem der Ansprüche 1 bis 4, **dadurch gekennzeichnet, dass** es ferner eine wirksame Menge eines wasserabweisenden Mittels aufweist, das unter den Organokieselsäureverbindungen und den fluorhaltigen Acryl-Mischpolymerisaten vorzugsweise mit einem Gewichtsanteil von 0,005 % bis 10 % und insbesondere vorzugsweise von 0,025 % bis 6 % und weiter vorzugsweise von 0,05 % bis 4 % im Verhältnis zum Gewicht der zerkleinerten Zellulosewerkstoffe ausgewählt wird.

6. Wiederaufschließbares, kompaktes Material nach einem der Ansprüche 1 bis 5, **dadurch gekennzeichnet, dass** das Schmiermittel in Form einer Schmierstoffmischung hinzugefügt wird, die einen Schmierstoff, ein oder mehrere Zellulosewerkstoffe und ein oder mehrere organische Bindemittel umfasst.

7. Wiederaufschließbares, kompaktes Material nach Anspruch 6, **dadurch gekennzeichnet, dass** die Schmiermittelmischung in Form sphärischer oder leicht sphärischer Granulate, deren Durchmesser 1 mm bis 5 mm, vorzugsweise 2 mm bis 4 mm und beispielsweise 3 mm beträgt, bzw. zylindrischer oder leicht zylindrischer Granulate mit einer Länge von 1mm bis 7 mm, vorzugsweise 2 mm bis 5 mm, zugegeben wird.

8. Wiederaufschließbares, kompaktes Material nach einem der Ansprüche 6 oder 7, **dadurch gekennzeichnet, dass** das organische Bindemittel Stärke in Mehl- oder Grießform und vorzugsweise Kartoffelstärke ist.

9. Wiederaufschließbares, kompaktes Material nach einem der Ansprüche 6 bis 8, **dadurch gekennzeichnet, dass** die Schmiermittelmischung in Gewichtsanteilen im Verhältnis zum Gesamtgewicht der Bestandteile der Schmiermittelmischung vor der etwaigen Formgebungsbehandlung:
- 40 % bis 60 %, vorzugsweise 45 % bis 55 % und insbesondere vorzugsweise 50 % bis 54 % Schmiermittel,
- 20 % bis 40 %, vorzugsweise 25 % bis 35 % und insbesondere vorzugsweise 29 % bis 33 % organische Bindemittel,
- 10 % bis 20 %, vorzugsweise 12 % bis 18 % und insbesondere vorzugsweise 15 % bis 16 % Zellulosewerkstoffe umfasst.

10. Wiederaufschließbares, kompaktes Material nach einem der Ansprüche 6 bis 9, **dadurch gekennzeichnet, dass** die Granulate der Schmiermittelmischung im Schüttgut eine Dichte von 0,2 bis 0,7, vorzugsweise von 0,3 bis 0,5, aufweisen.

11. Wiederaufschließbares, kompaktes Material nach einem der Ansprüche 6 bis 9, **dadurch gekennzeichnet, dass** die Granulate der Schmiermittelmischung im Schüttgut eine Dichte von 0,5 bis 0,9, vorzugsweise von 0,5 bis 0,7, aufweisen.

12. Wiederaufschließbares, kompaktes Material nach einem der Ansprüche 6 bis 11, **dadurch gekennzeichnet, dass** die Granulate der Schmiermittelmischung einen Wassergehalt vor der Formgebungsbehandlung mit einem Gewichtsanteil von 3 % bis 20 %, vorzugsweise von 5 % bis 15 %, aufweisen.

13. Wiederaufschließbares, kompaktes Material nach einem der Ansprüche 1 bis 12, **dadurch gekennzeichnet, dass** es einen Wassergehalt vor der Formgebungsbehandlung mit einem Gewichtsanteil von 5 % bis 15 % aufweist.

14. Wiederaufschließbares, kompaktes Material nach einem der Ansprüche 1 bis 13, **dadurch gekennzeichnet, dass** es eine Dichte von 0,9 bis 1,3, vorzugsweise von 1,0 bis 1,2, aufweist.

15. Herstellungsverfahren eines wiederaufschließbaren, kompakten Materials nach einem der Ansprüche 1 bis 14, das die nachstehenden Etappen umfasst:
- Auswahl eines zerkleinerten Zellulosewerkstoffs, eines organischen Bindemittels, eines Schmiermittels, ggf. weiterer Komponenten,
- Mischung der Verbindungen in einer beliebigen Reihenfolge.
- Formgebung der Mischung durch Strangpressen

16. Herstellungsverfahren nach Anspruch 15, **dadurch gekennzeichnet, dass** das Schmiermittel in der Form einer Schmiermittelmischung beigemengt wird.

17. Herstellungsverfahren nach Anspruch 16, **dadurch gekennzeichnet, dass** die Schmiermittelmischung in Granulatform beigemengt wird.

18. Herstellungsverfahren nach Anspruch 17, **dadurch gekennzeichnet, dass** die Granulate der Schmiermittelmischung durch Strangpressen oder Pelletisierung hergestellt werden, bevor sie mit anderen Komponenten des wiederaufschließbaren, kompakten Materials vermischt werden.
